# EUROPÄISCHE PATENTSCHRIFT

(11) **EP 0 318 821 B1**
(45) Veröffentlichungstag und Bekanntmachung des Hinweises auf die Patenterteilung: **09.03.1994**
(21) Anmeldenummer: 88119524.2
(22) Anmeldetag: 24.11.1988
(51) Int. Cl.: C09B 19/02, D06P 3/60

(54) **Imidazolylmethylengruppen enthaltende Triphendioxazin-Farbstoffe**
Triphenedioxazine dyes containing imidazolyl methylene groups
Colorants triphényl dioxaziniques contenant des groupes imidazolylméthylène

(30) Priorität: 03.12.1987 DE 3740978
(43) Veröffentlichungstag der Anmeldung: 07.06.1989
(73) Patentinhaber: BASF Aktiengesellschaft, 67063 Ludwigshafen (DE)
(72) Erfinder: Ruske, Manfred, DE-6700 Ludwigshafen (DE); Patsch, Manfred, Dr., D-6706 Wachenheim (DE)

(56) Entgegenhaltungen:
- EP-A- 0 034 725
- DE-A- 3 430 287

## Beschreibung

Die vorliegende Erfindung betrifft neue Imidazolylmethylengruppen enthaltende Farbstoffe, die ein Triphendioxazin als Chromophor aufweisen, sowie ihre Verwendung zum Färben und Bedrucken von Cellulosefasern enthaltendem Material.

Aus der DE-A-3 006 013 und der DE-A-3 044 563 sind bereits Imidazolylmethylengruppen enthaltende Farbstoffe bekannt.

Aufgabe der vorliegenden Erfindung war es, neue Papierfarbstoffe mit vorteilhaften anwendungstechnischen Eigenschaften bereitzustellen.

Es wurden nun neue Imidazolylmethylengruppen enthaltende Triphendioxazin-Farbstoffe der Formel I 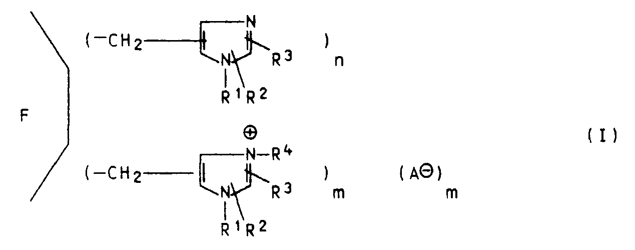
gefunden, in der
- R¹: Wasserstoff, C₁-C₆-Alkyl, C₂-C₅-Alkenyl oder C₂-C₃-Hydroxyalkyl,
- R²: und R³ gleich oder verschieden sind und unabhängig voneinander jeweils Wasserstoff, C₁-C₆-Alkyl oder C₂-C₅-Alkenyl,
- R⁴: Wasserstoff, C₁-C₆-Alkyl oder C₂-C₃-Hydroxyalkyl,
- A⊖: ein Äquivalent eines Anions,
- m: 0 bis 4,
- n: 0 bis 4, wobei 1≦ (m+n) ≦4 ist, und
- F: den (m+n)-wertigen Rest eines Triphendioxazin-Chromophors der Formel II

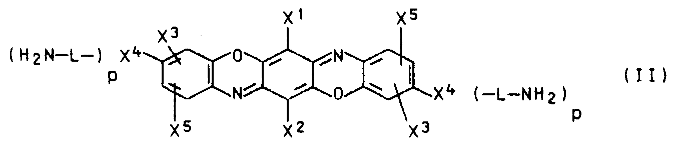

bedeuten, worin
- P: 0 oder 1,
- X¹ und X²: gleich oder verschieden sind und unabhängig voneinander jeweils für Wasserstoff oder Chlor,
- X³: für Wasserstoff oder Hydroxysulfonyl,
- X⁴: für den Fall, daß p 0 bedeutet, für Amino, C₁-C₆-Mono- oder Dialkylamino, C₂-C₄-Alkanoylamino, gegebenenfalls substituiertes Benzoylamino, C₁-C₄-Alkoxy oder gegebenenfalls substituiertes Phenoxy oder für den Fall, daß p 1 bedeutet, für Imino- oder C₁-C₆-Alkylimino,
- X⁵: für Chlor, Brom, Methyl, Methoxy, Sulfamoyl oder C₁-C₄-Mono- oder Dialkylsulfamoyl und
- L: für C₂-C₅-Alkylen stehen,
mit der Maßgabe, daß die Anzahl der gegebenenfalls im Rest des Triphendioxazin-Chromophors vorhandenen Sulfonsäuregruppen kleiner ist als die der protonierbaren und/oder quaternierbaren Stickstoffatome.

Alle in den obengenannten Formeln I und II auftretenden Alkylgruppen können sowohl geradkettig als auch verzweigt sein.

Wenn im Triphendioxazin-Chromophor der Formel II substituierte Phenylgruppen auftreten, kommen als Substituenten beispielsweise C₁-C₄-Alkyl, C₅-C₇-Cycloalkyl, C₁-C₄-Alkoxy oder Halogen in Betracht.

Reste R¹, R², R³ und R⁴ sind beispielsweise Methyl, Ethyl, Propyl, Isopropyl, Butyl, Isobutyl, sec-Butyl, tert-Butyl, Pentyl, Isopentyl, Neopentyl, tert-Pentyl, Hexyl, Isohexyl, Vinyl, Allyl, Methallyl oder Ethallyl.

Reste R¹ und R⁴ sind weiterhin beispielsweise 2-Hydroxyethyl oder 2- oder 3-Hydroxypropyl.

Als Anionen A⊖ kommen z.B. Chlorid, Sulfat, Methosulfat, Ethosulfat, Methylsulfonat, Benzolsulfonat, C₁-C₂₀-Alkylbenzolsulfonat, wie 2- oder 4-Methylbenzolsulfonat, 2- oder 4-(2-Ethylhexyl)benzolsulfonat oder 2- oder 4-Dodecylbenzolsulfonat, Acetat, Hydroxyacetat, Methoxyacetat, Propionat oder Lactat in Betracht.

Wenn p 0 ist, sind Reste X⁴ beispielsweise Mono- oder Dimethylamino, Mono-oder Diethylamino, Mono- oder Dipropylamino, Mono- oder Diisopropylamino, Mono- oder Dibutylamino, Mono- oder Diisobutylamino, Mono- oder Dipentylamino, Mono- oder Dihexylamino, N-Methyl-N-ethylamino, Acetylamino, Propionylamino, Butyrylamino, Isobutyrylamino, Benzoylamino, 4-Methylbenzoylamino, 4-Ethylbenzoylamino, 2,4-Dimethylbenzoylamino, 2-Methoxybenzoylamino, 4-Methoxybenzoylamino, 4-Chlorbenzoylamino, 2-Brombenzoylamino, 2,6-Dichlorbenzoylamino, Methoxy, Ethoxy, Propoxy, Isopropoxy, Butoxy, Isobutoxy, sec-Butoxy, Phenoxy, 4-Methylphenoxy, 4-Ethylphenoxy, 4-Cyclohexylphenoxy, 2- oder 4-Methoxyphenoxy, 2-Chlorphenoxy oder 4-Bromphenoxy.

Wenn p 1 ist, sind Reste X⁴ beispielsweise Imino, Methylimino, Ethylimino, Propylimino, Isopropylimino, Butylimino, Isobutylimino, sec-Butylimino, Pentylimino oder Hexylimino.

Reste X⁵ sind z.B. Mono- oder Dimethylsulfamoyl, Mono- oder Diethylsulfamoyl, Mono- oder Dipropylsulfamoyl, Mono- oder Diisopropylsulfamoyl, Mono- oder Dibutylsulfamoyl oder N-Methyl-N-ethylsulfamoyl.

Reste L sind z.B. Ethylen, Trimethylen, Tetramethylen, Pentamethylen oder Methylethylen.

Für den Fall, daß die erfindungsgemäßen Farbstoffe Sulfonsäuregruppen enthalten, liegen diese in der Regel in Form der Kalium-, Natrium- oder Ammoniumsalze vor oder bilden mit den im Molekül vorhandenen protonierbaren Stickstoffatomen ein Betain.

Bevorzugt sind Imidazolylgruppen enthaltende Triphendioxazin-Farbstoffe der Formel I, in der R¹ Wasserstoff oder C₁-C₄-Alkyl, insbesondere Methyl oder Ethyl bedeuten.

Weiterhin bevorzugt sind Triphendioxazin-Farbstoffe der Formel I, in der R² Wasserstoff oder C₁-C₄-Alkyl und R³ Wasserstoff bedeuten.

Weiterhin bevorzugt sind Triphendioxazin-Farbstoffe der Formel I, in der R⁴ C₁-C₄-Alkyl oder C₂-C₃-Hydroxyalkyl, insbesondere Methyl oder 2-Hydroxyethyl bedeuten.

Weiterhin bevorzugt sind Triphendioxazin-Farbstoffe der Formel I, in der X¹, X² und X³ jeweils Wasserstoff bedeuten.

Im Falle (m+n) >1 können die Farbstoffe der Formel I in Form von Mischungen aus Farbstoffen mit m und n je 1, 2, 3 und/oder 4 vorliegen, wobei m und n als Mittelwert auch gebrochene Zahlen sein können.

Vorzugsweise ist (m+n) 1 bis 4, wobei m oder n auch 0 (null) sein kann. Besonders bevorzugt sind Farbstoffe der Formel I, in der n 1 bis 4 und m 0 bedeuten.

Den erfindungsgemäßen Farbstoffen liegen die Triphendioxazin-Chromophore der obengenannten Formel II zugrunde. Die Triphendioxazine II müssen amidomethylierbar sein. Sie sind bekannt oder sind nach bekannten Verfahren herstellbar.

Die neuen Verbindungen der Formel I mit m = 0 können durch Umsetzen der Triphendioxazine II mit wasserfreiem Formaldehyd und Imidazolverbindungen der Formel III 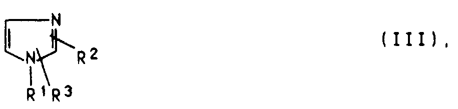
in der R¹, R² und R³ jeweils die obengenannte Bedeutung besitzen, in Gegenwart von sauren Mitteln erhalten werden.

Der Formaldeyhd kann bei der Reaktion in monomerer Form oder vorzugsweise in polymerer Form, beispielsweise als Paraformaldehyd oder Trioxan angewandt werden.

Die Imidazole III werden in mindestens der stöchiometrisch erforderlichen Menge, vorteilhaft im Überschuß zusammen mit wasserfreiem Formaldehyd angewendet (im allgemeinen ca. 1 Mol Formaldehyd je Mol III).

Man kann die Umsetzung zu den neuen Farbstoffen I auch mit C-Hydroxylmethylimidazolen durchführen, die vorher aus III und wasserfreiem Formaldehyd hergestellt worden sind, z.B. 4-Hydroxymethyl-5-methylimidazol oder 4-Methyl-5-hydroxymethylimidazol. Die Imidazole III können auch in Form ihrer Hydrochloride angewendet werden.

Die Umsetzung erfolgt im allgemeinen bei einer Temperatur von 0 bis 140°C, vorzugsweise 0 bis 100°C. Die Reaktionsdauer, die im allgemeinen 1 bis 48 Stunden beträgt, ist vom Triphendioxazin II, von der Anzahl der in II einzuführenden Methylenimidazolgruppen, dem sauren Mittel und der Reaktionstemperatur abhängig.

Als saure Mittel, die gleichzeitig auch als Reaktionsmedium dienen können, kommen z.B. Phosphorsäure oder 80 bis 100 gew.%ige Schwefelsäure, gegebenenfalls zusammen mit wasserabspaltenden Mitteln, wie Schwefeltrioxid, Phosphorpentoxid, Meta- oder Polyphosphorsäure, Essigsäureanhydrid, Benzol- oder Toluolsulfonsäure in Betracht. Als saures Mittel, das gleichzeitig auch als Reaktionsmedium dient, ist 96 bis 100 gew.%ige Schwefelsäure oder bis zu 12 gew.%iges Oleum bevorzugt.

Es ist auch möglich, bei der Umsetzung von II mit III in Schwefelsäure oder Oleum während oder nach Beendigung der Reaktion eine oder mehrere Sulfonsäuregruppen in den Triphendioxiazinrest einzuführen.

Bei der Imidazolylmethylierungsreaktion von solchen Triphendioxazinen II, die von vorneherein mehr als eine Sulfonsäuregruppe aufweisen, in Schwefelsäure beobachtet man im allgemeinen, daß während der Umsetzung mindestens eine Sulfonsäuregruppe abgespalten wird.

In einer bevorzugten Verfahrensvariante wird die Imidazolylmethylierungsreaktion unmittelbar nach der Bildung des Triphendioxazins II, die durch Cyclisierung eines 2,5-Diarylamino-1,4-benzochinons der Formel IV 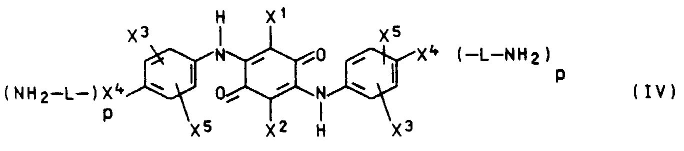
in der X¹, X², X³, X⁴, X⁵, L und p jeweils die obengenannte Bedeutung besitzen, in Schwefelsäure oder Oleum erfolgt, gegebenenfalls nach Korrektur der Säurekonzentration mittels Eis oder Wasser, durchgeführt.

Der Ringschluß der Benzochinone IV kann nach an sich üblichen Methoden, wie sie aus der DE-A-2 122 262, DE-A-2 124 080, DE-A-2 302 383, DE-A-2 344 781, DE-A-2 503 611, DE-A-2 823 828, DE-A-3 510 613 oder GB-A-2 019 872 bekannt sind, z.B. in konzentrierter Schwefelsäure oder Oleum (SO₃-Gehalt 1 bis 50 %) bei einer Temperatur von 10 bis 80°C, gegebenenfalls unter Zusatz von Oxidationsmitteln, wie Kalium- oder Ammoniumperoxodisulfat, Braunstein oder organischen Peroxiden, vorgenommen werden.

Weitere Ringschlußmethoden, beispielsweise in Oleum in Gegenwart von Iod oder anorganischen Iodverbindungen (EP-A-141 359) oder in Gegenwart von organischen Iodverbindungen (ältere Anmeldung DE-A-3 735 057) sind für die Kombination der beiden Verfahrensschritte, nämlich Cyclisierung und Imidazolylmethylierung besonders gut geeignet.

In manchen Fällen kann es auch zweckmäßig sein, die Cyclisierung der Benzochinone IV in Lösungsmitteln nach bekannten Verfahren durchzuführen, z.B. durch Erhitzen des Benzochinons IV auf eine Temperatur von 150 bis 210°C in einem inerten organischen Lösungsmittel, wie o-Dichlorbenzol, Trichlorbenzol, Nitrobenzol, Naphthalin oder Chlornaphthalin, gegebenenfalls in Gegenwart eines Säurehalogenids, z.B. Benzoylchlorid, p-Toluolsulfonsäurechlorid oder Thionylchlorid (DE-A-2 322 892, DE-A-3 045 471).

Es ist auch möglich, diejenigen Triphendioxazine der Formel II, die über eine Aminogruppe verfügen, durch Reaktion der Benzochinone IV mit einem Diamin gemäß der DE-A-2 823 828 herzustellen.

Die erfindungsgemäßen Farbstoffe der Formel I (mit m = 0) werden durch Austragen des Reaktionsgemisches auf Wasser oder Eis/Wasser gefällt und abfiltriert. Für den Fall, daß sie in der verdünnten wäßrigen Säure teilweise oder vollständig löslich sind, werden sie durch Zugabe von basischen Mitteln, z.B. Natron- oder Kalilauge oder Ammoniak, in Form der freien Base gefällt und durch Filtrieren abgetrennt und getrocknet oder in Form des wasserfeuchten Preßkuchens weiterverarbeitet.

Die Überführung in diejenigen Farbstoffe der Formel I, in der m>0 ist, erfolgt durch Protonierung, d.h. Lösen der freien Base in verdünnter Säure oder durch Quaternierung, d.h. Umsetzung mit einem Alkylierungsmittel der Formel Alk-Y, wobei Alk C₁-C₆-Alkyl oder C₂-C₃-Hydroxyalkyl und Y eine Abgangsgruppe, z.B. Chlor, Brom, Methosulfat oder Ethosulfat bedeutet, nach an sich bekannten Methoden.

Die erfindungsgemäßen Farbstoffe der Formel I sind in protonierter und quaternierter Form in Wasser leicht bis gut löslich. In Form der freien Base sind sie unter Salzbildung in verdünnten Säuren leicht löslich. Als Säure kommen z.B. diejenigen Säuren in Betracht, deren Anionen A⊖ oben aufgeführt sind.

Die neuen Farbstoffe der Formel I eignen sich in kationisierter Form zum Färben und Bedrucken von Cellulosefasermaterialien, insbesondere zum Färben von Papier in der Masse. Das mit den neuen Farbstoffen gefärbte Papier weist eine hohe Ausblutechtheit auf. Bei der Herstellung von gefärbtem Papier fallen bei Anwendung der erfindungsgemäßen Farbstoffe in der Regel ungefärbte Abwässer an.

Die folgenden Beispiele sollen die Erfindung näher erläutern. Die dort genannten Prozente beziehen sich, sofern nicht anders vermerkt, auf das Gewicht.

### Beispiel 1

142,6 g 6,13-Dichlor-3,10-bis(benzoylamino)triphendioxazin wurden in eine vorher bereitete Mischung aus 1200 g Schwefelsäuremonohydrat, 79 g 4-Methylimidazol und 29 g Paraformaldehyd bei 25 bis 40°C eingetragen und 8 Stunden bei 50 bis 52°C gerührt. Die Reaktionslösung wurde in Eiswasser ausgefällt und bei 25 bis 30°C mit Ammoniakwasser auf pH 9 eingestellt. Der Niederschlag wurde filtriert, mit Wasser neutral und salzfrei gewaschen und getrocknet. Ausbeute: 105 g einer blauen Farbstoffmischung der Formel

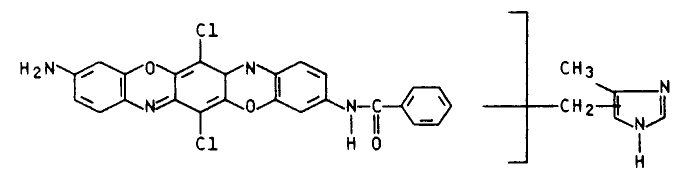

| | | | | | |
|---|---|---|---|---|---|
| C₃₀H₂₀Cl₂N₆O₃ (583) | ber. | Cl | 12,2 % | N | 14,4 % |
| | gef. | Cl | 13,6 % | N | 14,8 % |

Die Farbbase ist in verdünnter Essigsäure leicht löslich (λₘₐₓ 558,6 nm) und zieht aus dieser Lösung auf gebleichten Zellstoff quantitativ auf. Das Abwasser ist farblos. Sowohl die Ausblutechtheit der rotstichig blauen Papierfärbung als auch die Lichtechtheit sind sehr gut.

### Beispiel 2 und 3

Diese Beispiele wurden analog Beispiel 1 durchgeführt. Jedoch wurde anstelle von 6,13-Dichlor-3,10-bis(benzoylamino)triphendioxazin zum einen 6,13-Dichlor-3,10-bis(2-methylbenzoylamino)triphendioxazin (Beispiel 2) und zum anderen 6,13-Dichlor-3,10-bis(4-methylbenzolylamino)triphendioxazin (Beispiel 3) verwendet. Es wurden Farbbasen mit vergleichbaren Eigenschaften erhalten.

### Beispiel 4

7,9 g 6,13-Dichlor-3,10-bis(2-amino-2-methylethylamino)triphendioxazindisulfonsäure (hergestellt nach den Angaben der DE-A-3 510 613) wurden in 44 g Schwefelsäuremonohydrat gelöst. Bei 23 bis 40°C wurden 3,2 g 4-Methylimidazol und 1,2 g Paraformaldehyd eingetragen und 12 Stunden bei 58 bis 59°C gerührt. Die Reaktionslösung wurde in Eiswasser ausgefällt und mit Natronlauge und Ammoniakwasser auf pH 9 eingestellt. Die ausgefallene Farbbase wurde isoliert und getrocknet. Ausbeute: 7,4 g einer blauen Farbstoffmischung der Formel

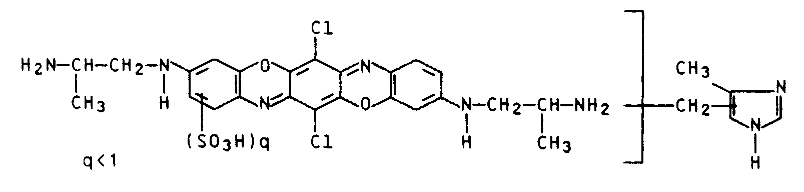

| | | | | | | | |
|---|---|---|---|---|---|---|---|
| C₂₉H₃₀Cl₂N₈O₅S (673) | ber. | Cl | 10,5 % | N | 16,6 % | S | 4,7 % |
| | gef. | Cl | 11,0 % | N | 17,0 % | S | 1,7 % |

Die Farbbase ist in verdünnter Essigsäure mit tiefblauer Farbe löslich (λₘₐₓ 576,6 nm) und zieht aus dieser Lösung auf gebleichten Zellstoff quantitativ auf. Das Abwasser ist farblos. Die brillantblaue Papierfärbung hat ein hohes Echtheitsniveau.

### Beispiel 5

15 g 2,5-Dichlor-3,6-bis[(4-(3-aminopropylamino)-3-hydroxysulfonylphenyl)amino]benzochinon wurden bei 20 bis 25°C in eine Mischung aus 90 g 2 %igem Oleum und 6 g Kaliumperoxodisulfat eingetragen. Darauf wurden weitere 6 g Kaliumperoxodisulfat portionsweise eingetragen und 2 Stunden bei 25°C gerührt. In diese Reaktionslösung wurden bei 20 bis 40°C 6,4 g 4-Methylimidazol und 2,3 g Paraformaldehyd eingetragen. Das Reaktionsgemisch wurde auf 58°C erwärmt, 10 Stunden bei 58°C gerührt, in Eiswasser ausgefällt und mit verdünnter Natronlauge zunächst auf pH 6,5 und dann mit Ammoniakwasser auf pH 9,8 gestellt. Die ausgefallene Farbbase wurde abgesaugt und elektrolytfrei gewaschen. Ausbeute: 14,7 g Produkt der Formel 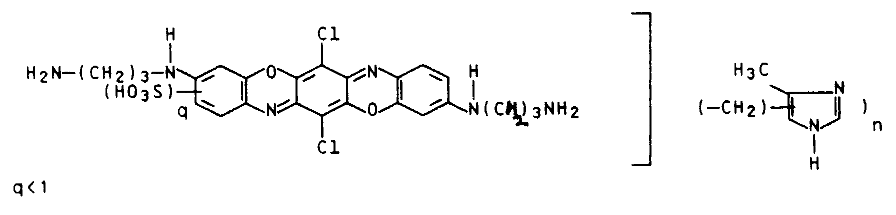
(Mischung der Komponenten mit n = 1 und n = 2, wobei die Komponente mit n = 1 überwiegt.)

| | | | | | | | |
|---|---|---|---|---|---|---|---|
| Für C₂₉H₃₀Cl₂N₈O₅S (673) | ber | N | 16,6 % | S | 4,7 % | Cl | 10,5 % |
| | gef | N | 16,5 % | S | 3,5 % | Cl | 9,5 % |

Die Farbbase ist in verdünnter Essigsäure mit tiefblauer Farbe löslich (λₘₐₓ 564,6 nm). Gebleichter Zellstoff wird in einem intensiven Blau gefärbt.

Die Ausblutechtheit und die Lichtechtheit der Papierfärbung sind sehr gut.

### Beispiel 6

19 g 2,5-Dichlor-3,6-bis[(4-(2-aminoethylamino]-3-hydroxysulfonylphenyl)-amino]benzochinon wurden bei 20 bis 25°C in ein Gemisch aus 137 g 40 %iges Oleum und 0,4 g Iodbenzol eingetragen und 16 Stunden bei 22 bis 25°C gerührt. Danach wurden bei dieser Temperatur 13 g Eiswasser eingetropft und bei 20 bis 40°C 8,8 g 4-Methylimidazol und 3,2 g Paraformaldehyd eingetragen und 12 Stunden bei 58°C gerührt. Die Reaktionslösung wurde in Eiswasser ausgefällt und mit Ammoniakwasser auf pH 9 gestellt. Die ausgefällte Farbbase wurde abgesaugt, gewaschen und getrocknet. Ausbeute: 17 g eines dunkelblauen Pulvers, das mit tiefblauer Farbe in verdünnter Essigsäure löslich ist. Bei Färbungen von Papiermasse aus gebleichtem Zellstoff ist das Abwasser fast farblos. Die Papierfärbungen haben eine gute Ausblutechtheit.

### Beispiel 7

23,5 g 2,5-Dichlor-3,6-bis[(4-amino-3-hydroxysulfonylphenyl)amino]benzochinon, 235 g 20 %iges Oleum und 0,24 g Kaliumiodid wurden 16 Stunden bei 25 bis 30°C gerührt. Darauf wurden 10,5 ml Eiswasser und 14 g 4-Methylimidazol und 5,1 Teile Paraformaldehyd eingetragen. Die Reaktionsmischung wurde 24 Stunden bei 65 bis 70°C gerührt, in Eiswasser gegeben und mit Ammoniakwasser bei pH 8,5 ausgefällt, abgesaugt und gewaschen. Ausbeute 22,4 g dunkelblaues Pulver.

| C₂₃H₁₆Cl₂N₂N₆O₅S (559) | | | | | | | | | | |
|---|---|---|---|---|---|---|---|---|---|---|
| ber | C | 49,37 % | H | 2,86 % | Cl | 12,7 % | N | 15,04 % | S | 5,7 % |
| gef | C | 49,5 % | H | 3,4 % | Cl | 13,2 % | N | 14,6 % | S | 6,9 % |

Der Farbstoff färbt gebleichten Zellstoff aus essigsaurer Lösung rostichig Blau.

### Beispiel 8

18,9 g 6,13-Dichlor-3,10-diphenoxytriphendioxazin wurden in eine Mischung eines Kondensationsproduktes aus 170 g 96 %iger Schwefelsäure, 5,8 g 4-Methylimidazol und 2,1 g Paraformaldheyd bei 15 bis 20°C eingetragen und 3 Stunden bei 25°C gerührt. Die Reaktionslösung wurde in Wasser gefällt, mit Ammoniakwasser auf pH 9,5 gestellt, abgesaugt, gewaschen und getrocknet. Ausbeute: 28 g eines roten Farbstoffpulvers das überwiegend der Formel 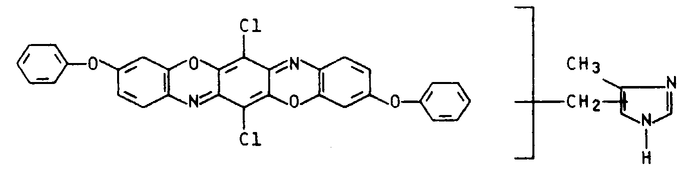
entspricht.

| | | | | | | | |
|---|---|---|---|---|---|---|---|
| C₃₅H₂₂Cl N₄O₄ (633) | ber. | N | 8,8 % | Cl | 11,2 % | | |
| | gef. | N | 11,0 % | Cl | 9,04 % | S | 0,29 % |

Wie aus der Elementaranalyse hervorgeht, enthält das Farbstoffpulver in geringem Maß auch eine sulfonierte Komponente.

Die Farbbase löst sich mit roter Farbe in verdünnter Essigsäure (λₘₐₓ 511,1 nm) und färbt gebleichten Zellstoff in einem blaustichigen Rot mit guter Ausblut- und Lichtechtheit.

Analog Beispiel 8 werden Farbstoffe erhalten, wenn man die in der folgenden Tabelle aufgeführten Triphendioxazine als Ausgangsmaterial verwendet. Bei den Farbstoffen handelt es sich um rote Farbbasen, die gebleichten Zellstoff aus verdünnter Essigsäure blaustichig rot färben.

| Bsp. Nr. | Menge [g] | Triphendioxazin |
|---|---|---|
| 9 | 21,35 | 6,13-Dichlor-3,10-bis(4-chlorphenoxy)triphendioxazin |
| 10 | 24,6 | 6,13-Dichlor-3,10-bis(4-cyclohexylphenoxy)triphendioxazin (λₘₐₓ 511 nm; 543,6 nm) |
| 11 | 19,8 | 6,13-Dichlor-3,10-bis(4-methylphenoxy)triphendioxazin |
| 12 | 20,9 | 6,13-Dichlor-3,10-bis(4-methoxyphenoxy)triphendioxazin |

### Anwendungsbeispiel 1

50 g einer Mischung aus 30 % Birkensulfatzellstoff und 70 % Kiefernsulfatzellstoff wurden in einem Liter Wasser (10°dH) bei Raumtemperatur zu einer Fasersuspension aufgeschlagen. Anschließend wurde mit 1 Liter gleichem Wasser verdünnt. Der Suspension wurde eine Mischung aus 2 g einer 10 %igen essigsauren Lösung des Farbstoffs aus Beispiel 1 und 10 ml Wasser zugesetzt. Das Gemisch wurde 15 Minuten leicht gerührt und dann mit Wasser auf 0,5 % Feststoffgehalt verdünnt. Mit dieser Suspension wurden auf Labor-Blattbildner der Firma Franck Papierblätter von 80 g/m² hergestellt und die feuchten Blätter 5 Minuten bei 100°C getrocknet. Man erhielt ein blau gefärbtes Papier. Das Abwasser war farblos. Die Ausblutechtheiten des gefärbten Papieres (DIN 53 991) sind sehr gut, ebenso die Lichtechtheit.

Gleich gute Ergebnisse werden erhalten, wenn das Gemisch aus Birkensulfatzellstoff/Kiefernsulfatzellstoff durch Kiefernsulfitzellstoff oder Kiefernsulfatzellstoff ersetzt wird. Man erhält rotstichig blaue Papiere mit ebenfalls hervorragenden Echtheitseigenschaften.

### Anwendungsbeispiel 2

15 kg Altpapier (holzhaltig), 25 kg gebleichter Holzschliff und 10 kg ungebleichter Sulfatzellstoff wurden im Pulper zu einer 3 %igen wäßrigen Stoffsuspension aufgeschlagen. Die Stoffsuspension wurde in einer Färbebütte auf 2 % verdünnt. Dieser Suspension wurden dann nacheinander unter Rühren 0,5 % lösliche, oxidativ abgebaute Maisstärke, 5 % Kaolin (jeweils bezogen auf trockene Faser) und 1,25 kg einer 5 %igen essigsauren Lösung des Farbstoffs aus Beispiel 5 zugegeben. Nach 20 Minuten wurde der Stoff in der Mischbütte mit 1 % (bezogen auf absolut trockene (atro) Faser) einer Harzleim-Dispersion versetzt. Die homogene Stoffsuspension wurde auf der Papiermaschine kurz vor dem Stoffauflauf, mit Alaun auf pH 5 eingestellt.

Auf der Papiermaschine wurde ein 80 g/m² schweres Tütenpapier maschinenglatt hergestellt, welches eine mittlere Blaunuance mit guten Ausblutechtheiten nach DIN 53 991 aufweist.

### Anwendungsbeispiel 3

25 kg Katalogpapier (Ausschuß), 60 kg gebleichter Holzschliff (65° Schopper Riegler) und 15 kg ungebleichter Sulfitzellstoff wurden im Pulper in 2500 l Wasser aufgeschlagen. Der 4 %igen wäßrigen Stoffsuspension wurden 0,4 % lösliche Stärke, 16 % Kaolin und 2 % Talkum (jeweils bezogen auf trockene Faser) zugegeben. Anschließend wurde die Stoffsuspension am Refiner auf 45° Schopper Riegler ausgemahlen. Der Stoffsuspension wurden 12 kg einer 10 %igen, essigsauren Lösung des Farbstoffs aus Beispiel 6 zugesetzt, (≙1 % trockenem Farbstoff bezogen atro Faser). Nach 15 Minuten Ziehzeit wurde dem Stoff Harzleim-Dispersion (Menge: 0,6 % trocken, bezogen auf atro Faser) zugesetzt. Nach 10 Minuten wurde der aus der Mischbütte abfließende Stoff kontinuierlich mit Wasser auf 0,8 % Stoffgehalt verdünnt und kontinuierlich mit Alaun (Al₂(SO₄)₃·18 H₂O) auf pH 4,5 gestellt (gemessen im Siebwasser) und in den Stoffauflauf gepumpt. Man erhielt blaues Katalogpapier (60 g/m²) mit guter Wasserechtheit und Lichtechtheit.

Werden anstelle des Farbstoffs aus Beispiel 6 die Farbstoffe der Beispiele 8 bis 11 verwendet, dann erhält man blaustichig rot gefärbtes Papier mit ebenfalls guten Naßechtheiten.

## Patentansprüche

1. Imidazolylmethylengruppen enthaltende Triphendioxazin-Farbstoffe der Formel I 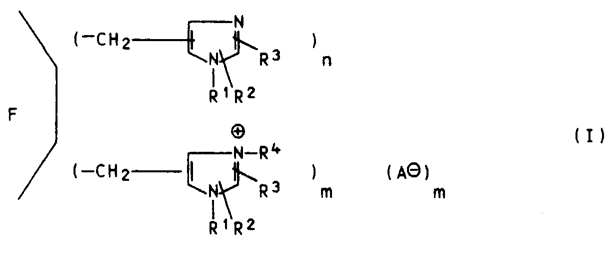 in der
R¹ Wasserstoff, C₁-C₆-Alkyl, C₂-C₅-Alkenyl oder C₂-C₃-Hydroxyalkyl,
R² und R³ gleich oder verschieden sind und unabhängig voneinander jeweils Wasserstoff, C₁-C₆-Alkyl oder C₂-C₅-Alkenyl,
R⁴ Wasserstoff, C₁-C₆-Alkyl oder C₂-C₃-Hydroxyalkyl,
A⊖ ein Äquivalent eines Anions,
m 0 bis 4,
n 0 bis 4, wobei 1≦ (m+n) ≦4 ist, und
F den (m+n)-wertigen Rest eines Triphendioxazin-Chromophors der Formel II 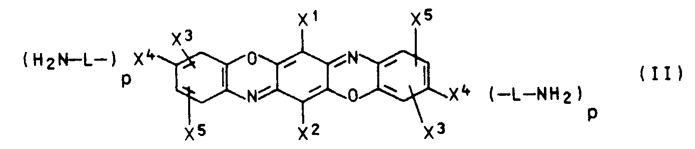 bedeuten, worin
p für 0 oder 1,
X¹ und X² gleich oder verschieden sind und unabhängig voneinander jeweils für Wasserstoff oder Chlor,
X³ für Wasserstoff oder Hydroxysulfonyl,
X⁴ für den Fall, daß p 0 bedeutet, für Amino, C₁-C₆-Mono- oder Dialkylamino, C₂-C₄-Alkanoylamino, gegebenenfalls substituiertes Benzoylamino, C₁-C₄-Alkoxy oder gegebenenfalls substituiertes Phenoxy
oder für den Fall, daß p 1 bedeutet, für Imino- oder C₁-C₆-Alkylimino,
X⁵ für Chlor, Brom, Methyl, Methoxy, Sulfamoyl oder C₁-C₄-Mono- oder Dialkylsulfamoyl und
L für C₂-C₅-Alkylen stehen,
mit der Maßgabe, daß die Anzahl der gegebenenfalls im Rest des Triphendioxazin-Chromophors vorhandenen Sulfonsäuregruppen kleiner ist als die der protonierbaren und/oder quaternierbaren Stickstoffatome.

2. Imidazolylmethylengruppen enthaltende Triphendioxazin-Farbstoffe gemäß Anspruch 1, dadurch gekennzeichnet, daß R¹ Wasserstoff oder C₁-C₄-Alkyl bedeutet.

3. Imidazolylmethylengruppen enthaltende Triphendioxazin-Farbstoffe gemäß Anspruch 1, dadurch gekennzeichnet, daß R² Wasserstoff oder C₁-C₄-Alkyl und R³ Wasserstoff bedeuten.

4. Imidazolylmethylengruppen enthaltende Triphendioxazin-Farbstoffe gemäß Anspruch 1, dadurch gekennzeichnet, daß R⁴ C₁-C₄-Alkyl oder C₂-C₃-Hydroxyalkyl bedeutet.

5. Imidazolylmethylengruppen enthaltende Triphendioxazin-Farbstoffe gemäß Anspruch 1, dadurch gekennzeichnet, daß X¹, X² und X³ jeweils Wasserstoff bedeuten.

6. Verwendung der Imidazolylmethylengruppen enthaltenden Triphendioxazin-Farbstoffe gemäß Anspruch 1 zum Färben und Bedrucken von Cellulosefasern enthaltendem Material.

## Claims

1. An imidazolylmethylene-containing triphendioxazine dye of the formula I 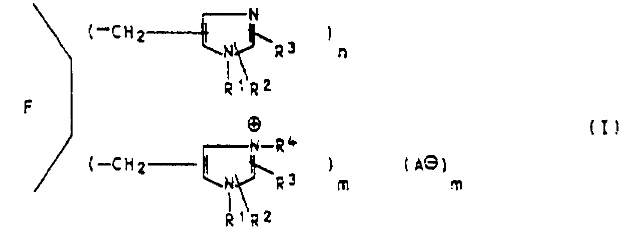 where
R¹ is hydrogen, C₁-C₆-alkyl, C₂-C₅-alkenyl or C₂-C₃-hydroxyalkyl,
R² and R³ are identical or different and each is independently of the other hydrogen, C₁-C₆-alkyl or C₂-C₅-alkenyl,
R⁴ is hydrogen, C₁-C₆-alkyl or C₂-C₃-hydroxyalkyl,
A^{⊖} is one equivalent of an anion,
m is from 0 to 4,
n is from 0 to 4, the sum of m + n being subject to the condition that 1≦ (m+n) ≦4, and
F is the (m+n)valent radical of a triphendioxazine chromophore of the formula II 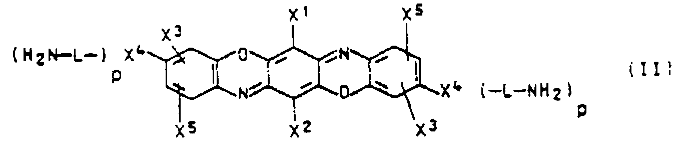
where
p is 0 or 1,
X¹ and X² and identical or different and each is independently of the other hydrogen or chlorine,
X³ is hydrogen or hydroxysulfonyl,
X⁴ is, if p is 0, amino, C₁-C₆-monoalkyl- or -dialkylamino, C₂-C₄-alkanoylamino, substituted or unsubstituted benzoylamino, C₁-C₄-alkoxy or substituted or unsubstituted phenoxy or, if p is 1, imino or C₁-C₆-alkylimino,
X⁵ is chlorine, bromine, methyl, methoxy, sulfamoyl or C₁-C₄-monoalkyl- or -dialkyl-sulfamoyl and
L is C₂-C₅-alkylene,
with the proviso that the number of any sulfo groups present in the radical of the triphendioxazine chromophore is smaller than the number of protonatable and/or quaternizable nitrogen atoms.

2. An imidazolylmethylene-containing triphendioxazine dye as claimed in claim 1, wherein R¹ is hydrogen or C₁-C₄-alkyl.

3. An imidazolylmethylene-containing triphendioxazine dye as claimed in claim 1, wherein R² is hydrogen or C₁-C₄-alkyl and R³ is hydrogen.

4. An imidazolylmethylene-containing triphendioxazine dye as claimed in claim 1, wherein R⁴ is C₁-C₄-alkyl or C₂-C₃-hydroxyalkyl.

5. An imidazolylmethylene-containing triphendioxazine dye as claimed in claim 1, wherein X¹, X² and X³ are each hydrogen.

6. The use of an imidazolylmethylene-containing triphendioxazine dye as claimed in claim 1, for dyeing and printing material containing cellulose fibers.

## Revendications

1. Colorants de la famille de la triphénodioxazine contenant des groupements imidazolylméthylène et répondant à la formule I 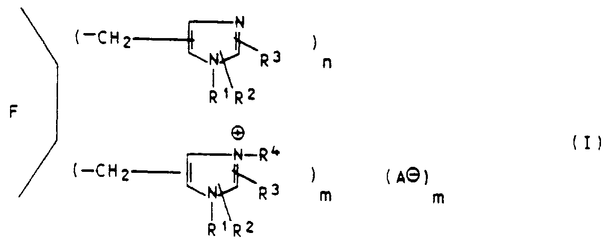 dans laquelle
R¹ représente un atome d'hydrogène ou un reste alkyle en C₁-C₆, alcényle en C₂-c₅ ou hydroxyalkyle en C₂-C₃,
R² et R³ sont identiques ou différents et representent chacun, indépendamment l'un de l'autre, un atome d'hydrogène ou un reste alkyle en C₁-C₆ ou alcényle en C₂-C₅,
R⁴ représente un atome d'hydrogène ou un reste alkyle en C₁-C₆ ou hydroxyalkyle en C₂-C₃.
A^{₋} représente un equivalent d'un anion
m est un nombre de 0 à 4,
n est un nombre de 0 à 4, avec 1 ≦ (m+n) ≦ 4, et
F représente le reste de valence (m+n) d'un chromophore de triphénodioxazine de formule II 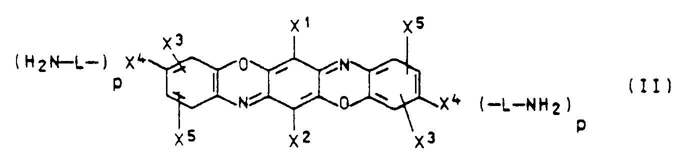
dans laquelle
p est mis pour 0 au 1,
X¹ et X² sont identiques au différents et sont mis chacun, indépendamment l'un de l'autre, pour un atome d'hydrogène ou de chlore,
X³ est mis pour un atome d'hydrogène ou un groupement hydroxysulfonyle,
X⁴ représente, dans le cas ou p est mis pour 0, un groupement amino, mono- ou di(alkyl en C₁-C₆)amino, (alcanoyl en C₂-C₄)amino, benzoylamino éventuellement substitué, alcoxy en C₁-C₄ au phénoxy eventuellement substitué
ou, dans le cas où p est mis pour 1, un groupement imino ou (alkyl en C₁-C₆)imino.
X⁵ est mis pour un atome de chlore, de brome ou pour un groupement méthyle, méthoxy, sulfamoyle ou mono- ou di(alkyl en C₁-C₄)sulfamoyle et
L est mis pour un groupement alkylène en C₂-C₅,
étant specifié que le nombre des groupements acide sulfonique éventuellement presents dans le reste du chromophore de triphénodiaxazine est inférieur à celui des atomes d'azote protonables et/ou quaternisables.

2. Colorants de la famille de la triphénodioxazine contenant des groupements imidazolylméthylène selon la revendication 1, caracterises en ce que R¹ représente un atome d'hydrogéne ou un reste alkyle en C₁-C₄.

3. Colorants de la famille de la triphénodioxazine contenant des groupements imidazolylméthylène selon la revendication 1, caractérisés en ce que R² représente un atome d'hydrogène ou un reste alkyle en C₁-C₄ et R³ représente un atome d'hydrogène.

4. Colorants de la famille de la triphénodioxazine contenant des groupements imidazolylméthylène selon la revendication 1, caractérisés en ce que R⁴ représente un reste alkyle en C₁-C₄ ou hydroxyalkyle en C₂-C₃.

5. Colorants de la famille de la triphénodioxazine contenant des groupements imidazolylméthylène selon la revendication 1, caractérisés en ce que X¹, X² et X³ représentent chacun un atome d'hydrogène.

6. Utilisation des colorants de la famille de la triphénodioxazine contenant des groupements imidazolylméthylène selon la revendication 1 pour la teinture et l'impression de matières contenant des fibres cellulosiques.
